(19) Europäisches Patentamt
European Patent Office
Office européen des brevets

(11) EP 4 610 853 A1

(12) EUROPEAN PATENT APPLICATION

(43) Date of publication:
03.09.2025 Bulletin 2025/36

(21) Application number: 24160782.9

(22) Date of filing: 01.03.2024

(51) International Patent Classification (IPC):
G06F 16/95 (2019.01)     G06F 17/40 (2006.01)

(52) Cooperative Patent Classification (CPC):
G06F 16/45; G06F 11/3438; G06V 40/174

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: netzreich GmbH
76275 Ettlingen (DE)

(72) Inventors:
• Bucher, Philipp
  76275 Ettlingen (DE)
• Schmidt, Ragnar
  76275 Ettlingen (DE)

(74) Representative: Bittner, Peter et al
Peter Bittner und Partner
Herrenwiesenweg 2
69207 Sandhausen (DE)

(54) **SYSTEM AND METHOD FOR TRANSMITTING EMOTIONAL STATE INDICATORS BETWEEN DIFFERENT USER GROUPS BASED ON QUANTIFIED EMOTIONAL STATES OF RESPECTIVE USERS**

(57) Computer-implemented method and system (100) is provided for quantifying emotional states of users (1, 2, 3) of a first group (10) of users to determine control instructions for transmitting emotional state indicators associated with the first group (10) to a second group (20) of users. A stream (11) of user events is received for each of the users (1, 2, 3) of the first group (10) and the events are buffered with their respective timestamps in a user event data structure (110). Each user event corresponds to a user action of a particular action type. After sorting (120), the user events (11f) are aggregated (130) during a current aggregation time interval into corresponding user specific action vectors (12). A transformation function (140) is applied to the user specific action vectors to obtain respective user specific emotion vectors (13). A current emotion score vector (14) is computed (150) for each user (1, 2, 3) of the first group (10) as quantification of the respective emotional states. A total current emotion score matrix (15) is derived (160) for all users (1, 2, 3), and control instructions (16) are computed (170) based on the current emotion score matrix values in accordance with predefined control rules.

FIG. 1

# EP 4 610 853 A1

## Description

### Technical Field

The present invention generally relates to electronic data processing, and more particularly, relates to computer-implemented methods, computer program products and systems for transmitting emotional state indicators of users of a first group to users of a second group.

### Background

With today's real-world events the online and on-site audiences are largely separated. For example, visitors of a real-world event, such as a sports event or a concert, typically participate in the event in a stadium or concert hall where the real-world event takes place. Online users can participate in the event at home or on their way via electronic devices which are connected to the Internet. A real-world event, as used herein, is therefore an event happening at a real-world location which can be attended via different attendance modalities: an on-site modality (real-world physical attendance) or an online modality (virtual remote attendance via the Internet).

In contrast to the on-site audience, the online audience is typically distributed and separated in location, time and technical equipment. There may be a possibility of partially transmitting image and sound data, but without making any use of it. Emotions and interactions of real-world attendees remain separated from the emotions and interactions of online users. That is, user emotions and behaviors are not being transported bidirectional. That is, at least the on-site audience does not at all recognize the emotions of the online audience whereas the online audience may partially recognize some on-site emotions in case the event is transmitted via a streaming service or the like where the online audience can perceive audio and/or video streams captured at the real-world event. In general, there is no feedback channel to transport their emotions and interactions to the real-world audience.

In some applications, individual online users may express some emotions by means of frequent chat feedback and the additional use of emojis. However, a chat is just an "out-of-band" channel. It is a technical challenge to summarize and aggregate a large number of individual messages, sensor signals and/or audio-visual signals of the individual online users in real time without a delay of up to 30 seconds.

The available individual user-based data sets cannot be used as a descriptive and comparable emotions indicator for comparing online vs. on-site emotions. Emotions of the online users cannot be understood without interpretation, since the amount of raw data is too large to process and compare on-site vs. online emotion data without the right context.

### Summary

There is therefore a need for a technical solution which enables on-site users (i.e., users attending a real-world event on-site) and online users (i.e., users attending the same real-world event from a remote location via online communication means) to share emotions between on-site and online users irrespective of the number of users. In more general terms, the herein disclosed solution describes a solution to the technical problem to enhance the communication between different user groups at different locations with regard to a particular real-world event. In particular, user emotions can be derived from different actions of a user which may be captured by a plurality of different sensor devices. Therefore, there is a need for a solution which is agnostic towards media breaks which may occur during the data processing of the original sensed data (captured by different types of sensors). This is achieved by embodiments as depicted in the independent claims. These embodiments comprise a computer-implemented method, a computer program product and a computer system for exchanging data between such user groups reflecting the emotional states of the user groups in addition to standard audio-visual communication data. Thereby, user-specific data captured by different sensor devices and associated with respective user actions are aggregated over an appropriate aggregation time interval. The aggregation allows smoothing of the data to level out outliers which might falsify the final results. The aggregated data is then transformed into emotion data for the respective user. This transformation makes the herein disclosed approach agnostic towards media breaks. The action related data can be captured with any device/technology but the resulting emotion data is in a format which is common for the respective user interaction scenario or application. The user-specific emotion data is then aggregated for all users of a first cohort and control instructions are generated based on the aggregated group emotion data allowing to control a device of a second cohort of users to adequately communicate the emotions of the first cohort. Thereby, the aggregation time interval can be adjusted to various interaction scenarios to enable near-real-time performance such that the emotion representation of the first cohort is communicated to the second cohort with a small time delay which is appropriate for the respective interaction scenario.

In one embodiment, the computer-implemented method is configured for quantifying emotional states of users of a first group of users to determine control instructions for transmitting emotional state indicators associated with the first group to a second group of users. The first and second groups attend the same real-world event at different locations. For example, the first group of users may be an online audience which attends a real-world event via Internet transmission, and the second group of users may be an on-site audience which physically attends the real-world event. In another example, the first group of users may be an on-site audience which physically attends the real-world event, and the second group of users may be an online audience which attends the real-world event via Internet transmission.

The computer-implemented method is executed by a computer system once the computer system has loaded a respective computer program with corresponding computer readable instructions and is processing such instructions with one or more processors.

The method comprises the following steps. A stream of user events for each of the users of the first group is received by the system. User events, as used herein, are events which are raised by user actions in response to the real-world event. The user events are buffered with their respective timestamps in a user event data structure. Each user event corresponds to a user action of a particular action type captured for a respective user, wherein the action type is characteristic of one or more emotional states of the respective user. For example, received user events may be received from any of the following user event detection devices: an image-based detection device, an audio-based detection device, an interactive computer device, or a body-function-based detection device. A body-function-based detection device can be smart watch, a fitness tracker or the like which is able to detect user events based on signals generated in response to certain body functions

(movement, heartbeat, etc.)

Examples of action types comprise:

- an action type associated with user movement comprising: sitting, jumping, bouncing, hand waving, face hiding;

- an action type associated with vocal utterance of the user comprising: cheering, laughing, crying, shouting, cursing;

- an action type associated with a facial expression of the user comprising: smiling, laughing, frowning/scowling;

- an action type associated with a verbal or graphical expression of the user comprising: liking, disliking;

- an action type associated with a body function of the user comprising: high/normal/low heartbeat, sweating, trembling.

A person skilled in the art may use further action types which are suitable to characterize the emotional state of a user. It is to be noted that the herein disclosed approach allows to use different sensor types for detecting a same user event. For example, a user event that corresponds to an action type associated with user movement may be raised by a camera-based sensor system, an acceleration sensor, a pressure sensor system integrated in the floor/carpet under the user, etc. A user event that corresponds to an action type associated with vocal utterance, such as laughing may not only be detected by an audio sensor (microphone) but can also detected by a camera-based system with respective image analysis functions which are able to determine that the user is laughing based on the users face motions.

The buffered user events (of the users of the first group) are then sorted in accordance with the respective timestamps. In an optional embodiment, the sorting step may further include a filtering step to filter the sorted user events in accordance with predefined filtering criteria adapted to avoid predefined undesired emotional state representation effects for the second group of users. For example, the predefined filtering criteria may include: filtering out user events if a respective event rate exceeds a predefined event rate limit, filtering out user events which are out of current context, filtering out user events associated with BOTs (i.e., associated with computer programs that work automatically, especially to search for and find information on the internet), filtering out user events which occurred in the past longer than a predefined time interval ago, and/or filtering out unlogic or self-contradicting user events. In case a user creates redundant information for a particular user event, such redundant information may be filtered out but may nevertheless be used to confirm the particular user event. For example, a jump of a user may be detected by a wearable device of the user detecting the jump via acceleration sensors. The same jump can be detected by a video-based system with a motion tracker function. The system recognizes that the corresponding action data of both sensor devices relate to the same jump and can filter out one of the user events. In this example, the acceleration data may still be ambiguous because similar data might be produced (e.g., by a wearable device attached to the wrist of the user) when the user raises his hands while sitting. In this case, the video data can be used to confirm the jump action of the user.

During a current aggregation time interval, the sorted user events are then aggregated into corresponding user specific action vectors. That is, sorted user events having a time stamp which belongs to the current aggregation time interval are aggregated into user specific action vectors for said current aggregation time interval. Each action vector component stores an aggregated user event value of the respective user for the respective action type. Once the aggregation is finished with regard to the current aggregation time interval, the last time stamp of the current aggregation time interval is set as the first timestamp of a following aggregation time interval (subsequent aggregation time interval). The current aggregation time interval may be a predefined time interval, or it may be dynamically determined in response to recent user events. For example, the event rate may be used to dynamically determine such interval. The system may aim at an average of x events per interval and identify the corresponding time interval by starting with a predefined base-interval which is then adjusted until the requirement of x events per interval in average is met.

A transformation function is then applied to the user specific action vectors to obtain respective user specific emotion vectors. The transformation function has a rule set adapted to compute each emotion vector component based on respective one or more action vector components. The transformation function transforms the action types into emotion types of the emotion vector components. For example, emotion types can comprise: enthusiasm, amusement, happiness, satisfaction, sadness, sorrow, disappointment, annoyance, fear, relief, surprise, contempt, disgust, confidence, tension, excitement, boredom, serenity, confusion, amazement, admiration. A person skilled in the art may also use additional or other emotion types.

The system then computes a current emotion score vector for each user of the first group as quantification of the respective emotional states by computing an average for a plurality of past user specific emotion vectors and the current user specific emotion vector. For example, the average may be computed as a weighted average for the plurality of past user specific emotion vectors and the current user specific emotion vector, wherein the current user specific emotion vector has the highest weight and the weight decreases towards earlier user specific emotion vectors. Using such weighting, the impact of past user emotions on the current emotion score vector is attenuated but not ignored. By taking into account emotion vectors of the past, a smooth development of the emotion score vector for a particular user is derived, thus avoiding undesired sudden changes in the data in the data reflecting the user motions.

In case of a missing emotion vector at a particular point in time, the missing emotion vector may be computed by extrapolation of preceding emotion vectors. Thereby, the extrapolation may be performed using an attenuation factor. This can be advantageous to avoid kinks in in the curve of emotion vectors by smoothing the curve using the extrapolation.

In one implementation, the total current emotion score vector may be an aggregate of the current emotion score vectors of all users of the first group.

In one implementation, the total current emotion score vector may be an aggregate of the current emotion score vectors of a sub-set of users (cohort) of the first group which is selected based on respective user properties. The respective user properties may be determined based on the respective user specific action vectors or user specific emotion vectors. Determining current emotion score vectors for different cohorts of the first user group allows to account for a higher granularity in the tracking of emotions of such cohorts. For example, two cohorts may be associated with fan groups of two teams playing against each other. Very likely, the emotions of these cohorts will be diametrically opposite in many situations (e.g., when one team scores a goal).

A total current emotion score matrix is derived from the current emotion score vectors for the users. The system computes one or more control parameters of one or more control instructions based on the current emotion score matrix values in accordance with predefined control rules. Thereby, a control instruction is adapted for execution on at least one receiving device of the second group of users to communicate respective emotional state indicators for the first group to the second group. In case a control parameter of at least one control instruction complies with a predefined transmission selection rule, the respective at least one control instruction is transmitted to the at least one receiving device. Examples of the control parameter complying with the predefined transmission selection rule include: the control parameter exceeds a predefined threshold; the control parameter dominates a further conflicting control parameter; or static rule(s). Examples of static rules include: setting a maximum number of subsequent transmissions allowed for the same control instruction, temporary deactivation of certain control instructions dependent on the context (e.g., during a speech or a minute of silence, etc.), or boosting rules for hard prioritization of certain control instructions.

In one embodiment, a computer program product is provided for quantifying emotional states of users of a first group of users to determine control instructions for transmitting emotional state indicators associated with the first group to a second group of users, the first and second groups attending a same real-world event at different locations. The program, when loaded into a memory of a computing device and executed by at least one processor of the computing device, executes the steps of the computer-implemented method as claimed herein.

In one embodiment, a computer system is provided for quantifying emotional states of users of a first group of users to determine control instructions for transmitting emotional state indicators associated with the first group to a second group of users, the first and second groups attending a same real-world event at different locations. Thereby, the computer system implements functional modules (i.e., modules defined by a computer program loaded into the memory of the computer system) adapted to execute the method steps according to the computer-implemented method as claimed herein.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

**Short description of the figures**

FIG. 1 illustrates a block diagram of a computer system for quantifying emotional states of users of a first group of users to determine control instructions for transmitting emotional state indicators associated with the first group to a second group of users according to an embodiment;
FIG. 2 is a flow chart for a computer-implemented method to quantifying emotional states of users of a first group of users to determine control instructions for transmitting emotional state indicators associated with the first group to a second group of users according to an embodiment;
FIG. 3 illustrates aggregating user specific events during an aggregation time interval into an action vector according to an embodiment;
FIG. 4 illustrates transforming a user specific action vector into a user specific emotion score vector according to an embodiment;
FIG. 5 illustrates the generation of control instructions for a receiving device of the second group of users based on an emotion score matrix for the first group of users according to and embodiment;
FIG. 6 shows examples of facial motion events of a user which can be associated with emotional states of the user; and
FIG. 7 is a diagram that shows an example of a generic computer device and a generic mobile computer device, which may be used with the techniques described herein.

**Detailed description**

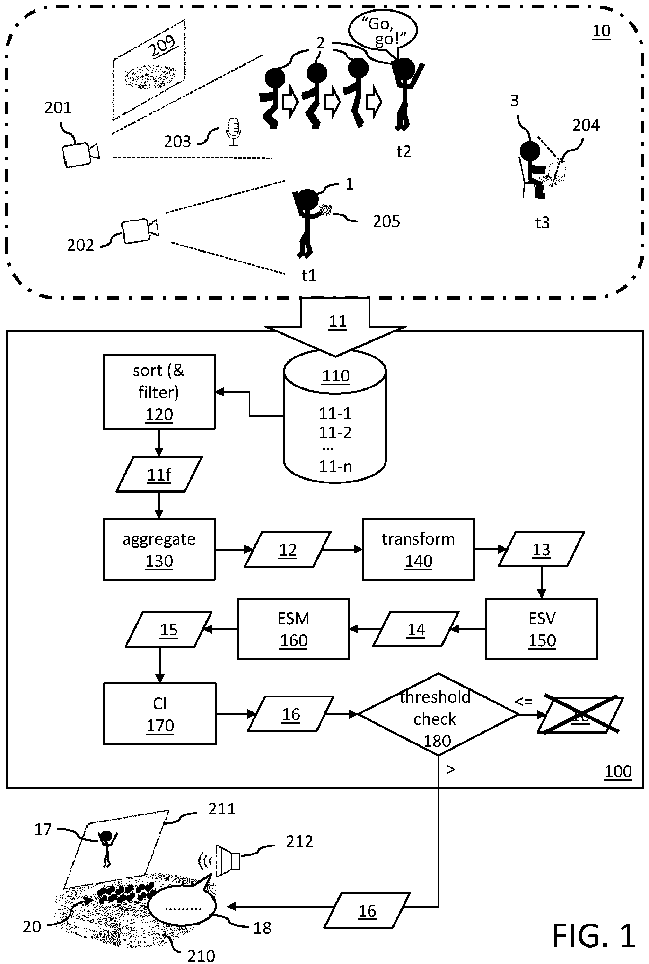

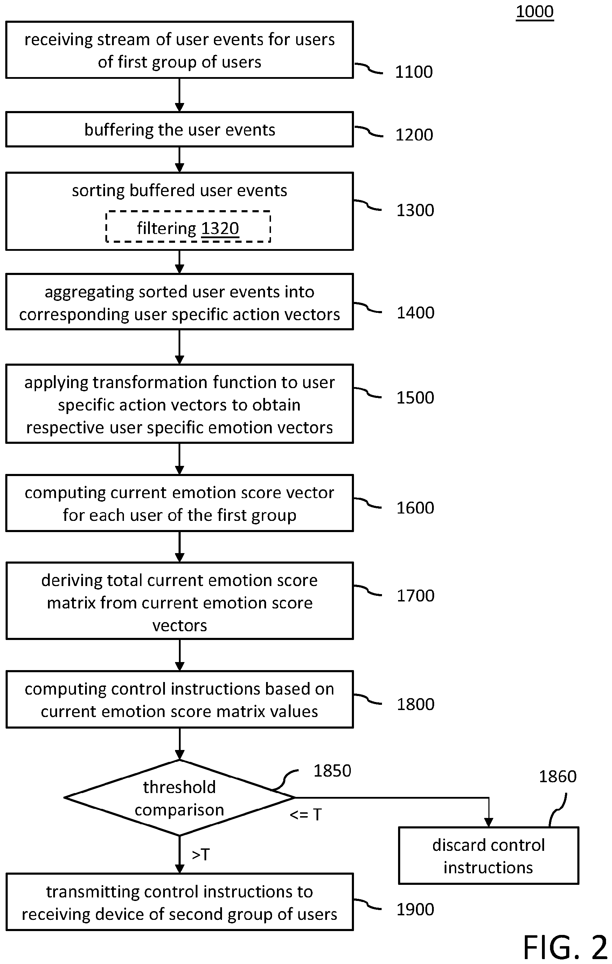

FIG. 1 includes a block diagram of a computer system 100 for quantifying emotional states of users 1, 2, 3 of a first group 10 of users to determine control instructions for transmitting emotional state indicators associated with the first group 10 to a second group 20 of users. Thereby, the first and second groups 10, 20 attend the same real-world event at different locations via different attendance modalities (remote virtual attendance via the Internet vs. physical attendance at the real-world event location). System 100 is configured to execute a computer-implemented method 1000 as illustrated by the flowchart of FIG. 2. The various steps of method 1000 are executed by respective functional modules of system 100. In the following description, system 100 of FIG. 1 is described in view of method 1000. Therefore, the description of FIG. 1 also refers to reference numbers of FIG. 2.
System 100 is communicatively coupled with communication devices used by the users of the first group 10 via respective interfaces. Therefore, system 100 can receive 1100 a stream 11 of user events for each of the users 1, 2, 3 of the first group 10. FIG. 1 illustrates some examples of user communication devices which may be suitable to capture such user events and transmit them to system 100 in the event stream 11. For example, user 1 uses a video camera system 202 which can capture user events by using image processing means to extract from the captured video stream certain actions performed by user 1. For example, camera system 202 may identify certain motions of user 1 (e.g., waving hand(s), jumping, standing up, sitting down, etc.). Camera system 202 may also include a face recognition function which is able to analyze facial expressions of user 1 (e.g., grinning, frowning, laughing, etc.). Each time the camera system 202 detects a new motion or a new facial recognition, a corresponding event may be fired and added to the event stream 11. In the example, user 1 also wears a wearable smart device 205 attached to its wrist. Such a wearable device 205 may be a smart watch, a fitness tracker or the like. Typically, such devices include acceleration sensors and/or gyroscope sensors which also allow the detection of particular movements. Events like jumping, standing up, sitting down or any hand movements can be detected by wearable device 205 and may also be added to the event stream 11.
The events are all associated with respective time stamps indicating the time when the corresponding events occur. In the example, user 1 is raising arms at time t1. Multiple sensors for the same user may create redundant information for the same event. In such cases, redundant information may be used to confirm a certain event and transmit only a single event the event stream. User 1 may attend the real-world event via the smart watch 205 (remote virtual modality). The real-world event may be a sports event taking place in a sports stadium 210 where users of group 20 physically attend in person in the stadium. The event may be streamed via the internet, so that user 1 can follow the sports event via the smart watch. Assuming that the favorite team of user 1 just scored a goal, user 1 is jumping and cheering which is detected by the camera system (possible via motion recognition and face recognition analysis) and the acceleration sensors of smart watch 205. The smart watch may also measure the heartbeat of user 1 and event raising may depend on certain heart beat thresholds. One or more corresponding events can then be transmitted via the event stream 11 to system 100.
In the example, the second user 2 of user group 10 is following the sports event on a screen 209. User 2 uses another camera system 201 and also has a microphone 203 which can track audio events of the user. Similarly, to user 1, user 2 also jumps and cheers as a reaction the scoring of its favorite team. However, the associated time stamp t2 may be a bit earlier or later than t1 of user 1 for different reasons. The reaction times of the users may differ, but also network latencies may cause different minor delays of the sports event transmission to the different communication devices 209 and 205. In the case of user 2, the audio event ("Go, go!") can be used to automatically classify the corresponding video event (Jump) as a positive event (instead of a negative event where the user is jumping out of anger). The events raised by user 2 are also received by system 100 via the event stream 11.

In the example, user 3 is watching the sports event using an interactive computing device 204 which may also be equipped with a webcam for motion and/or facial expression recognition. In addition, user 3 may use a chat function which allow to express certain events (e.g., applause, thumbs up/down, etc.) via a keyboard or mouse device. User 3 may be a fan of the team which did not score and, therefore, does not show any positive reaction at t3 shortly after the scoring. User 3 remains seated and may even provide some negative comments in the chat which trigger corresponding events raised by user 3 and received by system 100 in the event stream 11.

System 100 buffers 1200 the received user events 11-1 to 11-n (of user group 10) with their respective timestamps in a user event data structure 110. Each user event corresponds to a user action of a particular action type captured for a respective user. Thereby, an action type is characteristic of one or more emotional states of the respective user. For example, an action type "APPLAUSE" may be characteristic of emotional states "happy" and "enthusiastic". An action type "YAWNING" may be characteristic of emotional states "sad" and "bored". An action type "HIGH HEARTBEAT" may be characteristic of emotional states "excited" or "frightened", and so on. Further examples of action types include but are not limited to:

- action types associated with user movement including: sitting, jumping, bouncing, hand waving, face hiding, etc.

- action types associated with vocal utterance of the user including: cheering, laughing, crying, shouting, cursing, etc.

- action types associated with a facial expression of the user including: smiling, laughing, frowning/scowling, etc.

- action types associated with a verbal or graphical expression of the user including: liking, disliking, etc.

- action types associated with a body function of the user including: high/normal/low heartbeat, sweating, trembling, etc.

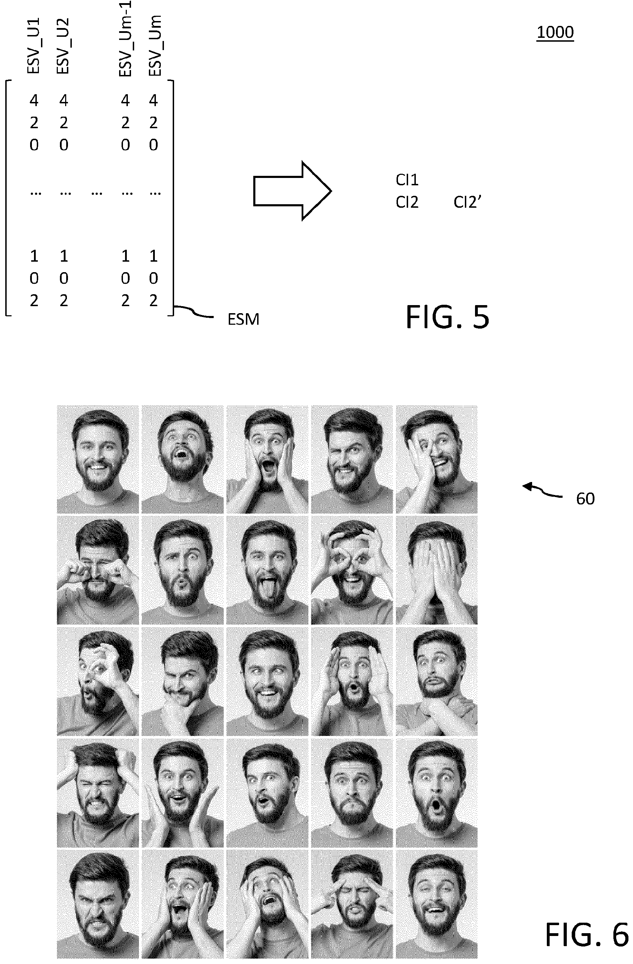

In particular, action types associated with facial or verbal expressions may be directly associated with a particular emotional state. FIG. 6 shows an example of a plurality of facial expressions in 5x5 matrix 60 of images which may all be classified with a particular emotional state. Typically, such annotations are made by respective experts in emotional state expressions. For example, the upper left image at matrix position (1, 1) can represent an action type "SMILE MOTION" which is associated with the emotional state "happy". The image at position (1, 3) can represent an action type "ASTONISHED MOTION" and may be associated with the emotional state "excited". The image at position (5, 1) can represent an action type "ANGER MOTION" and may be associated with an emotional state "angry". A person skilled in the art of theories of emotion can assign respective action types to each of the facial expressions in FIG. 6 and define associations with respective emotional states. An overview on this topic can be found in "Facial Expression" From: Encyclopedia of Human Behavior (Second Edition), 2012 (https://www.sciencedirect.com/topics/psychology/facial-ex pression).

Returning to FIG. 1, the buffered user events 11-1 to 11-n are then sorted 1300 in accordance with the respective timestamps by a sorting module 120 because user events may arrive in a different order than they occur (e.g., in case they are raised by different technical means). In an advantageous embodiment, the sorting module 120 is a sort and filter module which also performs an optional filtering step 1320 on the buffered user events. The sorted user events are further filtered 1320 in accordance with predefined filtering criteria. Such predefined filtering criteria are adapted to avoid predefined undesired emotional state representation effects for the second group 20 of users (i.e., avoid predefined emotional state representations that are not to be communicated to the second group). In other words, the method tries to avoid the exchange of undesired emotional state representation effects between the user groups 10 and 20. For example, user events may be filtered out if a respective event rate exceeds a predefined event rate limit, filtering out user events which are out of current context, filtering out user events associated with BOTs, filtering out user events which occurred in the past longer than a predefined time interval ago, filtering out unlogic or self-contradicting user events. Examples of filtering criteria are explained further down in the context of a further scenario description.

An aggregation module 130 of system 100 aggregates 1400 the sorted (and optionally filtered) user events 11f occurring during a current aggregation time interval into corresponding user specific action vectors 12. Thereby, each action vector component stores an aggregated user event value of the respective user for the respective action type.

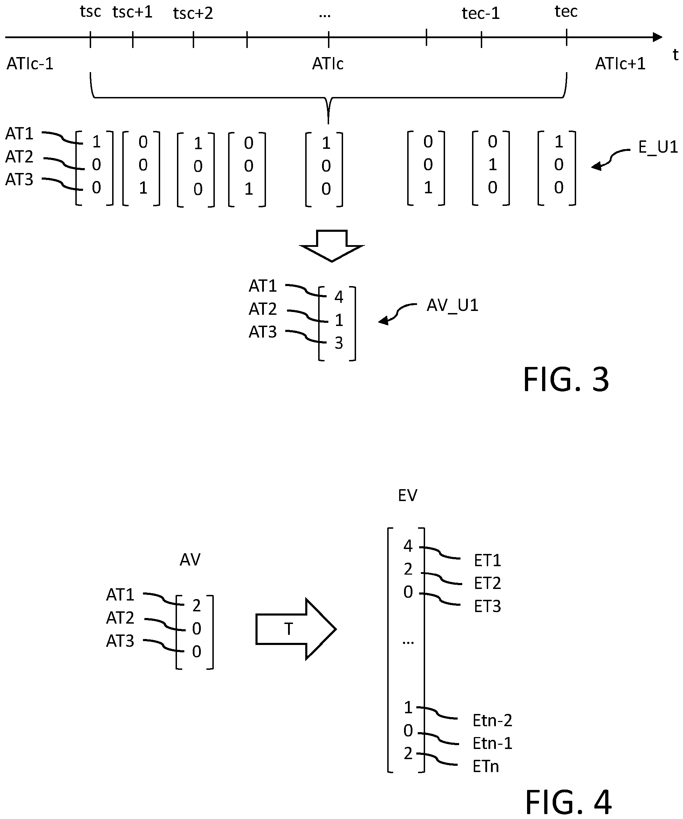

Turning briefly to FIG. 3, the current aggregation time interval ATIc starts with time stamp tsc and ends withs time stamp tec. At the end of aggregating the ATIc, the last time stamp tce of the current aggregation time interval ATIc is set as the first timestamp of the following aggregation time interval ATIc+1. Similarly, tsc was the last time stamp in the previous aggregation time interval ATIc-1. In the example, simplified action vectors reflecting an event stream E_U1 of a first user are illustrated with only three action types AT1, AT2 and AT3 being used. At each time stamp tsc to tse of ATIc, the corresponding action vector indicates which user event was raised. For example, at tsc only AT1 is raised. At tsc+1 only AT3 is raised, and so on. The user specific action vector AV_U1 for ATIc is obtained by adding the action type values for AT1, AT2 and AT3 that occurred during ATIc. In the example, the eight user events during ATIc result in the user specific action vector AV_U1 (4, 1, 3).

Returning to FIG. 1, a transformation function T 140 is applied 1500 to the user specific action vectors 12 to obtain respective user specific emotion vectors 13. Thereby, the transformation function 140 has a rule set adapted to compute each emotion vector component based on respective one or more action vector components. FIG. 4 illustrates a simplified example of the transformation function T being applied to an action vector AV with three action vector components AT1 to AT3. In this example, only the user events corresponding to action type AT1 were raised two times during the current aggregation time interval. The transformation function T describes that AT1 is mapped to the emotional states ET1, ET2, ETn-2 and ETn which are components of the n-dimensional emotion vector EV (4, 2, 0, ..., 1, 0, 2). A particular action type may be characteristic of multiple emotional states. For example, an action type "JUMP" can express happy, enthusiastic, but also anxious or excited. The transformation function T may apply different weights to the respective emotional states associated for said action type AT1. In the example of FIG. 4, the weights are the following: $ET1 \rightarrow 2$, $ET2 \rightarrow 1$, $ETn-2 \rightarrow 0.5$, $ETn \rightarrow 1$. In more general, a rule set does not need to be static but can dynamically take into account details of the corresponding user event, such as for example, the height of a jump, the loudness of a voice signal, etc., and map a respective action vector component to different emotional states dependent on the intensity of the underlying event. Another example of a rule set of the transformation function can be implemented as a Natural Language Processing Artificial Intelligence (NLP-AI) which had been trained to evaluate chat messages.

The user specific emotion vectors can be seen as kind of raw emotion vectors which are only focused on the current aggregation time interval. However, past emotions of a user may still affect the emotions in the current aggregation time interval. Therefore, an emotion score vector module 150 computes 1600 a current emotion score vector 14 for each user of the first group 10 as quantification of the respective emotional states by computing an average for a plurality of past user specific emotion vectors and the current user specific emotion vector. The average may be computed as a weighted average for the plurality of past user specific emotion vectors and the current user specific emotion vector, wherein the current user specific emotion vector has the highest weight and the weight decreases towards earlier user specific emotion vectors. A person skilled in the art may use other weights for a weighted average computation. The weights may depend on the use case scenario but also on the type of user groups involved. For example, for users attending a sports event other weights may be used than for users attending a concert. A detailed computation example is given with a further scenario example down below.

An emotion score matrix module ESM 160 derives 1700 a total current emotion score matrix 15 from the current emotion score vectors 14 for the users of the first group 10. In FIG. 5, the total current emotion score matrix ESM is shown on the left hand. In the example, ESM includes emotion score vectors ESV_U1 to ESV_Um for m users of user group 1.

A control instruction module C! 170 then computes 1800 one or more control parameters of one or more control instructions 16 based on the current emotion score matrix values in accordance with predefined control rules. Thereby, each control instruction is adapted for execution on at least one receiving device 211, 212 of the second group 20 of users to communicate respective emotional state indicators 17, 18 for the first group 10 to the second group 20. A threshold check module 180 checks if a control parameter of at least one control instruction complies with a predefined transmission selection rule (e.g., the control parameter exceeds a predefined threshold). In such case, the respective at least one control instruction 16 is transmitted 1900 to the at least one receiving device 211, 212. In case the control instruction does not comply with the predefined selection rule (e.g., the control instruction does not exceed the threshold), the control instruction is discarded 1860.

In one implementation, the control parameter complies with the predefined transmission selection rule if the control parameter exceeds a predefined threshold. In another implementation, the control parameter complies with the predefined transmission selection rule if the control parameter dominates a further conflicting control parameter. For example, control instructions may be transmitted in fixed intervals and, during such a transmission interval, the various instructions may be ranked and the instruction with the highest rank finally wins and is transmitted at the end of the respective transmission interval.

In case the receiving device is a visual display device (e.g., a large screen in the sports stadium), the control instructions may be animation instructions for one or more avatars representing the first user group 10 on the visual display device. For example, the predefined control rules may result in a control instruction CI1 (cf. FIG. 5) for an avatar to make the avatar "grin" if during the current aggregation time interval, the emotional state "happy" prevails over other emotional states in ESM. If in the following aggregation time interval, the emotional state "enthusiastic" prevails, the respective animation instruction CI2 for the avatar can change to "cheer". A person skilled in the art can define respective mappings between emotional state values in the ESM and respective animation rules for the avatar to animate the avatar in such a way that the second user group 20 can smoothly experience the emotional trends of the remote first user group 10 in the stadium via the graphical representation 17 of the first user group 10.

Alternatively, or in addition to the visual representation 17, further control instructions may be generated for other media channels. For example, when using an audio channel, respective audio representations 18 of the emotional states may be transmitted. For example, in case the emotional state "enthusiastic" prevails, a control instruction CI2' for an audio system 212 of the sports stadium may be computed which instructs the sound system to generate cheering noises to be played over the stadium speakers. Such cheering noises can amplify the second user group's perception of the emotional state prevailing within the first user group 10 - in particular when supporting the visual representation 17. In other words, control instructions CI2, CI2' for different media channels can be transmitted in parallel respective receiving devices such that the respective emotion representations of the first user group 10 are presented in parallel to the second user group 20.

In one implementation, the first user group may comprise sub-groups where the users of a subgroup (cohort) have at least one common characteristics. For example, in the case of the real-world event being a sports event with two teams playing against each other, a first subgroup can comprise users which are fans of the first team, and a second subgroup can comprise users which are fans of the second team. In such a scenario, the above disclosed method may be applied to each subgroup separately. As a result, the real-world audience of user group 20 may receive separate representations of the emotions of the two fan groups. For example, a first avatar may provide the emotions of the fans of the first team and a second avatar may provide the emotions of the fans of the second team. Of course, there can be more subgroups dependent on the type of common characteristics chosen for defining the subgroups. By using the concept of subgroups, it is possible to allow an exchange of the emotional states of multiple user groups at a more granular level.

In the following, a further example scenario "Radio World" is disclosed in detail. In this example, the traditional radio experience is transformed into a dynamic and immersive virtual environment "Broadcasting Hub". A real-world radio event is thereby transformed into a virtual event transmitted via the internet to remote users via respective communication devices. At the same, a real-world audience is attending the event in a studio of a radio station. The "Broadcasting Hub" can be a multi-faceted structure that houses a series of interconnected spaces, primarily dedicated to broadcasting and entertainment. Within the hub, multiple state-of-the-art broadcasting studios are positioned. These studios serve as the birthplace of a diverse range of audio streams, effectively manifesting as distinct radio channels, each catering to various interests and tastes. One feature of this scenario is a Studio Stage which is a dedicated space for conducting live interviews, podcasts, and events. That is, the Studio Stage is a virtual representation of a real stage in the real radio station. A constant flow of activity characterizes this stage. For example, guests, such as bands, musicians, and artists, may engage in conversations and perform live for a studio audience and a global remote audience. A seamless fusion of interviews and live performances can enrich the listeners' experience by bridging the gap between analog and digital worlds.

In the example scenario, there is a live event within the Studio Stage environment, that is intricately streamed from the physical (real) world, further enhancing the immersive experience. This includes a live interview and performance by a renowned band, where the band shares insights and debut their latest composition, creating a connection between the artists and their audience.

To keep visitors informed and engaged, a prominent Live Ticker can be positioned on a (virtual) monitor adjacent to the Studio Stage. This digital display constantly updates and broadcasts information about upcoming events, ensuring that attending users always know what's happening within the Radio World.

Additionally, the exterior of the Broadcasting Hub may showcase a studio stage, providing a platform for concerts, live performances, and cultural events. This venue can be designed to accommodate larger on-site audiences, ensuring a dynamic and inclusive atmosphere for on-site participants and the remote (virtual) users.

In the example, three remote users (referred to as U1 to U3 in the following tables) are attending a music performance which is broadcasted via the Broadcasting Hub. Each of the users may also be represented in the virtual world by a personal avatar which can move around in the landscape of the Broadcasting Hub and which can be controlled by the users U1 to U3 to express their current emotional states. However, this personal avatar is not to be confused with the representation of the emotional state of the entire group of remote users for the real-world on-site audience.

In table 0.1, examples of user events which can be raised by the remote users are given. These events are referred to in the following scenario tables with their acronyms E1 to E13. In the example, the events of the event list are used also as control instructions for the personal avatars of the users in the virtual world of the Broadcasting Hub. Certain events relate to motions of the users, some events relate to the participation of the personal avatars in the scenario, and some events related to actions performed by the users while interacting with a chat function of the Broadcasting Hub. Some events can be raised directly by the users via a chat function of the Broadcasting Hub. Some motion events may be raised by the users by sending respective control instructions to their personal avatars via an appropriate control device. Some motion events (body or face motions of the user) may be detected and raised by respective camera systems. Some events (body function events) may be detected and raised by respective body-function sensors.

Table 0.1 - user events

| acronyn | event list for avatar | in virtual world |
|---------|----------------------|------------------|
| E2 | MUSIC | Listen to music |
| E9 | FOCUS_STAGE | Watching the stage |
| E12 | LEAVE_SCENARIO | Leaving scenario |
| E1 | ENTER_SCENARIO | Entering scenario |
| E3 | THUMBS_UP | Motion event |
| E7 | YAWNING | Motion event |
| E13 | CHEER | Motion event |
| E10 | APPLAUSE | Motion event |
| E4 | POSITIV | Chat-text (AI analyzed) |
| E11 | NEUTRAL | Chat-text (AI analyzed) |
| E8 | NEGATIV | Chat-text (AI analyzed) |
| E6 | JUMP | Motion event |
| E5 | SIT | Motion event |

In tables 1.1 to 1.3, the raw events raised by users U1 (table 1.1), U2 (table 1.3) and U3 (table 1.3) are listed. Each raw event has a time stamp (T column), an event indicator (EV-column), a user column (US), and 13 columns E1 to E13 defining an action vector for the respective event. In the example, time stamps are set by minute. That is, events with T=1 occurred in the first minute, events with T=2 in the second minute, and so on. In the action vector columns, the column which corresponds to the current event EV is set to '1' while all other columns of the action vector are '0'.

In the example, the system uses an aggregation time interval with a duration of three minutes. That is, every three minutes the event specific action vectors associated with particular time stamps are aggregated into an action vector for the current aggregation time interval. These aggregated action vectors are shown in the rows AP(current aggregation time interval) with the current aggregation time interval of the example changing every three minutes (t=[1-3] → t=[4-6] → t=[7-9] → ...). The length of the aggregation time intervals can be adjusted to the scenario. For example, the aggregation time interval for a real-world music event may be longer than for a sports event. The action vectors for the respective aggregation time intervals include the aggregate values for each component of the action vector during the respective aggregation time interval (the respective aggregated action type values). The length of an aggregation time interval typically depends on the type of event. For example, for a concert certainly longer aggregation time intervals are acceptable than for certain sport events, in particular team events with at least two teams. In more general, for events with a permanently changing interaction volume (e.g., smooth and quiet playing phase in a football game → short phase with a goal threat for one team → foul leading to an interruption of the game), the aggregation time interval may be adjusted dynamically based on the current event rate as explained above. Relatively short aggregation time intervals can also be advantageous in cases where many segments are generated without any events at all. This allows to take into account such segments with a cool down factor weighting as explained in detail further down below.

Table 1.1 associated with user U1 illustrates an embodiment where the sorting module also performs filtering on the raw events with a predefined filtering rule defining a maximum number of events per event type during an aggregation time interval. In the example of table 1.1, the filtering rule allows a maximum of six events of the same event type during an aggregation interval. Therefore, during the aggregation time interval t=[7-9], only the first six events E6 (JUMP) are taken into account in the respective aggregated action vector. The remaining E6 raw events all raised at time stamp '8' are filtered out by the system (indicated by a bold italics font with the respective time stamp values underlined).

Table 1.1- User U1

| T | EV | US | E2 | E9 | E12 | E1 | E3 | E7 | E13 | E10 | E4 | E11 | E8 | E6 | E5 |
|---|----|----|----|----|-----|----|----|----|-----|-----|----|-----|----|----|----|
| 1 | E1 | U1 | 0 | 0 | 0 | 1 | 0 | 0 | 0 | 0 | 0 | 0 | 0 | 0 | 0 |
| 1 | E2 | U1 | 1 | 0 | 0 | 0 | 0 | 0 | 0 | 0 | 0 | 0 | 0 | 0 | 0 |
| 2 | E3 | U1 | 0 | 0 | 0 | 0 | 1 | 0 | 0 | 0 | 0 | 0 | 0 | 0 | 0 |
| 2 | E4 | U1 | 0 | 0 | 0 | 0 | 0 | 0 | 0 | 0 | 1 | 0 | 0 | 0 | 0 |

(continued)

| T | EV | US | E2 | E9 | E12 | E1 | E3 | E7 | E13 | E10 | E4 | E11 | E8 | E6 | E5 |
|---|---|---|---|---|---|---|---|---|---|---|---|---|---|---|---|
| 2 | E5 | **U1** | 0 | 0 | 0 | 0 | 0 | 0 | 0 | 0 | 0 | 0 | 0 | 0 | 1 |
| 3 | E6 | **U1** | 0 | 0 | 0 | 0 | 0 | 0 | 0 | 0 | 0 | 0 | 0 | 1 | 0 |
| **AP(t=[1-3])** | | **U1** | **1** | **0** | **0** | **1** | **1** | **0** | **0** | **0** | **1** | **0** | **0** | **1** | **1** |
| 4 | E6 | **U1** | 0 | 0 | 0 | 0 | 0 | 0 | 0 | 0 | 0 | 0 | 0 | 1 | 0 |
| 4 | E9 | **U1** | 0 | 1 | 0 | 0 | 0 | 0 | 0 | 0 | 0 | 0 | 0 | 0 | 0 |
| 4 | E6 | **U1** | 0 | 0 | 0 | 0 | 0 | 0 | 0 | 0 | 0 | 0 | 0 | 1 | 0 |
| 4 | E7 | **U1** | 0 | 0 | 0 | 0 | 0 | 1 | 0 | 0 | 0 | 0 | 0 | 0 | 0 |
| 5 | E7 | **U1** | 0 | 0 | 0 | 0 | 0 | 1 | 0 | 0 | 0 | 0 | 0 | 0 | 0 |
| 5 | E6 | **U1** | 0 | 0 | 0 | 0 | 0 | 0 | 0 | 0 | 0 | 0 | 0 | 1 | 0 |
| 5 | E4 | **U1** | 0 | 0 | 0 | 0 | 0 | 0 | 0 | 0 | 1 | 0 | 0 | 0 | 0 |
| 6 | E8 | **U1** | 0 | 0 | 0 | 0 | 0 | 0 | 0 | 0 | 0 | 0 | 1 | 0 | 0 |
| **AP(t=[4-6])** | | **U1** | **0** | **1** | **0** | **0** | **0** | **2** | **0** | **0** | **1** | **0** | **1** | **3** | **0** |
| 7 | E6 | **U1** | 0 | 0 | 0 | 0 | 0 | 0 | 0 | 0 | 0 | 0 | 0 | 1 | 0 |
| 8 | E6 | **U1** | 0 | 0 | 0 | 0 | 0 | 0 | 0 | 0 | 0 | 0 | 0 | 1 | 0 |
| 8 | E6 | **U1** | 0 | 0 | 0 | 0 | 0 | 0 | 0 | 0 | 0 | 0 | 0 | 1 | 0 |
| 8 | E6 | **U1** | 0 | 0 | 0 | 0 | 0 | 0 | 0 | 0 | 0 | 0 | 0 | 1 | 0 |
| 8 | E6 | **U1** | 0 | 0 | 0 | 0 | 0 | 0 | 0 | 0 | 0 | 0 | 0 | 1 | 0 |
| 8 | E6 | **U1** | 0 | 0 | 0 | 0 | 0 | 0 | 0 | 0 | 0 | 0 | 0 | 1 | 0 |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| *8* | *E6* | *U1* | *0* | *0* | *0* | *0* | *0* | *0* | *0* | *0* | *0* | *0* | *0* | *1* | *0* |
| 8 | E9 | **U1** | 0 | 1 | 0 | 0 | 0 | 0 | 0 | 0 | 0 | 0 | 0 | 0 | 0 |
| 9 | E9 | **U1** | 0 | 1 | 0 | 0 | 0 | 0 | 0 | 0 | 0 | 0 | 0 | 0 | 0 |
| 9 | E4 | **U1** | 0 | 0 | 0 | 0 | 0 | 0 | 0 | 0 | 1 | 0 | 0 | 0 | 0 |
| 9 | E10 | **U1** | 0 | 0 | 0 | 0 | 0 | 0 | 0 | 1 | 0 | 0 | 0 | 0 | 0 |
| **AP(t=[7-9])** | | **U1** | **0** | **2** | **0** | **0** | **0** | **0** | **0** | **1** | **1** | **0** | **0** | **6** | **0** |
| 10 | E9 | **U1** | 0 | 1 | 0 | 0 | 0 | 0 | 0 | 0 | 0 | 0 | 0 | 0 | 0 |
| 10 | E3 | **U1** | 0 | 0 | 0 | 0 | 1 | 0 | 0 | 0 | 0 | 0 | 0 | 0 | 0 |
| 10 | E6 | **U1** | 0 | 0 | 0 | 0 | 0 | 0 | 0 | 0 | 0 | 0 | 0 | 1 | 0 |
| 11 | E9 | **U1** | 0 | 1 | 0 | 0 | 0 | 0 | 0 | 0 | 0 | 0 | 0 | 0 | 0 |
| 11 | E6 | **U1** | 0 | 0 | 0 | 0 | 0 | 0 | 0 | 0 | 0 | 0 | 0 | 1 | 0 |
| 12 | E9 | **U1** | 0 | 1 | 0 | 0 | 0 | 0 | 0 | 0 | 0 | 0 | 0 | 0 | 0 |
| 12 | E3 | **U1** | 0 | 0 | 0 | 0 | 1 | 0 | 0 | 0 | 0 | 0 | 0 | 0 | 0 |
| 12 | E3 | **U1** | 0 | 0 | 0 | 0 | 1 | 0 | 0 | 0 | 0 | 0 | 0 | 0 | 0 |
| 12 | E3 | **U1** | 0 | 0 | 0 | 0 | 1 | 0 | 0 | 0 | 0 | 0 | 0 | 0 | 0 |

(continued)

| T | EV | US | E2 | E9 | E12 | E1 | E3 | E7 | E13 | E10 | E4 | E11 | E8 | E6 | E5 |
|---|---|---|---|---|---|---|---|---|---|---|---|---|---|---|---|
| AP(t=[10 -12]) | | **U1** | **0** | **3** | **0** | **0** | **4** | **0** | **0** | **0** | **0** | **0** | **0** | **2** | **0** |
| 13 | E9 | **U1** | 0 | 1 | 0 | 0 | 0 | 0 | 0 | 0 | 0 | 0 | 0 | 0 | 0 |
| 13 | E3 | **U1** | 0 | 0 | 0 | 0 | 1 | 0 | 0 | 0 | 0 | 0 | 0 | 0 | 0 |
| 13 | E10 | **U1** | 0 | 0 | 0 | 0 | 0 | 0 | 0 | 1 | 0 | 0 | 0 | 0 | 0 |
| 14 | E9 | **U1** | 0 | 1 | 0 | 0 | 0 | 0 | 0 | 0 | 0 | 0 | 0 | 0 | 0 |
| 14 | E3 | **U1** | 0 | 0 | 0 | 0 | 1 | 0 | 0 | 0 | 0 | 0 | 0 | 0 | 0 |
| 14 | E6 | **U1** | 0 | 0 | 0 | 0 | 0 | 0 | 0 | 0 | 0 | 0 | 0 | 1 | 0 |
| 14 | E6 | **U1** | 0 | 0 | 0 | 0 | 0 | 0 | 0 | 0 | 0 | 0 | 0 | 1 | 0 |
| 15 | E11 | **U1** | 0 | 0 | 0 | 0 | 0 | 0 | 0 | 0 | 0 | 1 | 0 | 0 | 0 |
| 15 | E11 | **U1** | 0 | 0 | 0 | 0 | 0 | 0 | 0 | 0 | 0 | 1 | 0 | 0 | 0 |
| 15 | E12 | **U1** | 0 | 0 | 1 | 0 | 0 | 0 | 0 | 0 | 0 | 0 | 0 | 0 | 0 |
| AP(t=[13 -15]) | | **U1** | **0** | **2** | **1** | **0** | **2** | **0** | **0** | **1** | **0** | **2** | **0** | **2** | **0** |

Table 1.2 associated with user U2 illustrates an embodiment where the sorting module also performs filtering on the raw events with a predefined filtering rule which filters out outdated events. In the example of table 1.2, during the aggregation time interval t=[7-9] the system has till received two raw events with time stamp values '4' and '3' (italic bold fonts). This may happen when a raw event associated with a previous aggregation interval is received with a delay and the aggregation for the previous aggregation time interval is already completed. In such a case, the respective filtering rule filters out such old events as they are not relevant for the current aggregation time interval.

Table 1.2 - User U2

| T | EV | US | E2 | E9 | E12 | E1 | E3 | E7 | E13 | E10 | E4 | E11 | E8 | E6 | E5 |
|---|---|---|---|---|---|---|---|---|---|---|---|---|---|---|---|
| 1 | E1 | U2 | 0 | 0 | 0 | 1 | 0 | 0 | 0 | 0 | 0 | 0 | 0 | 0 | 0 |
| 1 | E2 | U2 | 1 | 0 | 0 | 0 | 0 | 0 | 0 | 0 | 0 | 0 | 0 | 0 | 0 |
| 1 | E6 | U2 | 0 | 0 | 0 | 0 | 0 | 0 | 0 | 0 | 0 | 0 | 0 | 1 | 0 |
| 1 | E6 | U2 | 0 | 0 | 0 | 0 | 0 | 0 | 0 | 0 | 0 | 0 | 0 | 1 | 0 |
| 1 | E3 | U2 | 0 | 0 | 0 | 0 | 1 | 0 | 0 | 0 | 0 | 0 | 0 | 0 | 0 |
| 2 | E3 | U2 | 0 | 0 | 0 | 0 | 1 | 0 | 0 | 0 | 0 | 0 | 0 | 0 | 0 |
| 2 | E6 | U2 | 0 | 0 | 0 | 0 | 0 | 0 | 0 | 0 | 0 | 0 | 0 | 1 | 0 |
| 2 | E9 | U2 | 0 | 1 | 0 | 0 | 0 | 0 | 0 | 0 | 0 | 0 | 0 | 0 | 0 |
| 3 | E9 | U2 | 0 | 1 | 0 | 0 | 0 | 0 | 0 | 0 | 0 | 0 | 0 | 0 | 0 |
| 3 | E9 | U2 | 0 | 1 | 0 | 0 | 0 | 0 | 0 | 0 | 0 | 0 | 0 | 0 | 0 |
| 3 | E7 | U2 | 0 | 0 | 0 | 0 | 0 | 1 | 0 | 0 | 0 | 0 | 0 | 0 | 0 |
| AP(t=[1-3]) | | **U2** | **1** | **3** | **0** | **1** | **2** | **1** | **0** | **0** | **0** | **0** | **0** | **3** | **0** |
| 4 | E9 | U2 | 0 | 0 | 0 | 0 | 0 | 1 | 0 | 0 | 0 | 0 | 0 | 0 | 0 |
| 4 | E9 | U2 | 0 | 0 | 0 | 0 | 0 | 1 | 0 | 0 | 0 | 0 | 0 | 0 | 0 |
| 5 | E3 | U2 | 0 | 0 | 0 | 0 | 1 | 0 | 0 | 0 | 0 | 0 | 0 | 0 | 0 |
| 5 | E3 | U2 | 0 | 0 | 0 | 0 | 1 | 0 | 0 | 0 | 0 | 0 | 0 | 0 | 0 |
| 6 | E6 | U2 | 0 | 0 | 0 | 0 | 0 | 0 | 0 | 0 | 0 | 0 | 0 | 1 | 0 |
| 6 | E6 | U2 | 0 | 0 | 0 | 0 | 0 | 0 | 0 | 0 | 0 | 0 | 0 | 1 | 0 |
| AP(t=[4-6]) | | **U2** | **0** | **0** | **0** | **0** | **2** | **2** | **0** | **0** | **0** | **0** | **0** | **2** | **0** |

(continued)

| T | EV | US | E2 | E9 | E12 | E1 | E3 | E7 | E13 | E10 | E4 | E11 | E8 | E6 | E5 |
|---|----|----|----|----|-----|----|----|----|-----|-----|----|-----|----|----|----|
| 7 | E9 | U2 | 0 | 1 | 0 | 0 | 0 | 0 | 0 | 0 | 0 | 0 | 0 | 0 | 0 |
| *4* | *E6* | *U2* | *0* | *0* | *0* | *0* | *0* | *0* | *0* | *0* | *0* | *0* | *0* | *1* | *0* |
| 7 | E9 | U2 | 0 | 1 | 0 | 0 | 0 | 0 | 0 | 0 | 0 | 0 | 0 | 0 | 0 |
| *3* | *E6* | *U2* | *0* | *0* | *0* | *0* | *0* | *0* | *0* | *0* | *0* | *0* | *0* | *1* | *0* |
| 7 | E3 | U2 | 0 | 0 | 0 | 0 | 1 | 0 | 0 | 0 | 0 | 0 | 0 | 0 | 0 |
| 8 | E3 | U2 | 0 | 0 | 0 | 0 | 1 | 0 | 0 | 0 | 0 | 0 | 0 | 0 | 0 |
| 8 | E9 | U2 | 0 | 1 | 0 | 0 | 0 | 0 | 0 | 0 | 0 | 0 | 0 | 0 | 0 |
| 8 | E3 | U2 | 0 | 0 | 0 | 0 | 1 | 0 | 0 | 0 | 0 | 0 | 0 | 0 | 0 |
| 9 | E3 | U2 | 0 | 0 | 0 | 0 | 1 | 0 | 0 | 0 | 0 | 0 | 0 | 0 | 0 |
| AP(t=[7-9]) | | U2 | 0 | 3 | 0 | 0 | 4 | 0 | 0 | 0 | 0 | 0 | 0 | 0 | 0 |
| 10 | E9 | U2 | 0 | 1 | 0 | 0 | 0 | 0 | 0 | 0 | 0 | 0 | 0 | 0 | 0 |
| 10 | E3 | U2 | 0 | 0 | 0 | 0 | 1 | 0 | 0 | 0 | 0 | 0 | 0 | 0 | 0 |
| 10 | E9 | U2 | 0 | 1 | 0 | 0 | 0 | 0 | 0 | 0 | 0 | 0 | 0 | 0 | 0 |
| 11 | E3 | U2 | 0 | 0 | 0 | 0 | 1 | 0 | 0 | 0 | 0 | 0 | 0 | 0 | 0 |
| 11 | E3 | U2 | 0 | 0 | 0 | 0 | 1 | 0 | 0 | 0 | 0 | 0 | 0 | 0 | 0 |
| 12 | E9 | U2 | 0 | 1 | 0 | 0 | 0 | 0 | 0 | 0 | 0 | 0 | 0 | 0 | 0 |
| 12 | E9 | U2 | 0 | 1 | 0 | 0 | 0 | 0 | 0 | 0 | 0 | 0 | 0 | 0 | 0 |
| 12 | E3 | U2 | 0 | 0 | 0 | 0 | 1 | 0 | 0 | 0 | 0 | 0 | 0 | 0 | 0 |
| AP(t=[10-12]) | | U2 | 0 | 4 | 0 | 0 | 4 | 0 | 0 | 0 | 0 | 0 | 0 | 0 | 0 |
| 13 | E10 | U2 | 0 | 0 | 0 | 0 | 0 | 0 | 0 | 1 | 0 | 0 | 0 | 0 | 0 |
| 13 | E9 | U2 | 0 | 1 | 0 | 0 | 0 | 0 | 0 | 0 | 0 | 0 | 0 | 0 | 0 |
| 13 | E3 | U2 | 0 | 0 | 0 | 0 | 1 | 0 | 0 | 0 | 0 | 0 | 0 | 0 | 0 |
| 14 | E6 | U2 | 0 | 0 | 0 | 0 | 0 | 0 | 0 | 0 | 0 | 0 | 0 | 1 | 0 |
| 14 | E6 | U2 | 0 | 0 | 0 | 0 | 0 | 0 | 0 | 0 | 0 | 0 | 0 | 1 | 0 |
| 15 | E11 | U2 | 0 | 0 | 0 | 0 | 0 | 0 | 0 | 0 | 0 | 1 | 0 | 0 | 0 |
| 15 | E11 | U2 | 0 | 0 | 0 | 0 | 0 | 0 | 0 | 0 | 0 | 1 | 0 | 0 | 0 |
| 15 | E12 | U2 | 0 | 0 | 1 | 0 | 0 | 0 | 0 | 0 | 0 | 0 | 0 | 0 | 0 |
| AP(t=[13-15]) | | U2 | 0 | 1 | 1 | 0 | 1 | 0 | 0 | 1 | 0 | 2 | 0 | 2 | 0 |

Table 1.3 associated with user U3 illustrates an embodiment where the event stream is interrupted during the aggregation time interval t=[10-12]. For example, user U3 may have dropped out of the Broadcasting Hub for three minutes and no events were raised during this time interval.

Table 1.3 - User U3

| T | EV | US | E2 | E9 | E12 | E1 | E3 | E7 | E13 | E10 | E4 | E11 | E8 | E6 | E5 |
|---|----|----|----|----|-----|----|----|----|-----|-----|----|-----|----|----|----|
| 1 | E1 | U3 | 0 | 0 | 0 | 1 | 0 | 0 | 0 | 0 | 0 | 0 | 0 | 0 | 0 |
| 1 | E1 | U3 | 1 | 0 | 0 | 0 | 0 | 0 | 0 | 0 | 0 | 0 | 0 | 0 | 0 |
| 2 | E7 | U3 | 0 | 0 | 0 | 0 | 0 | 1 | 0 | 0 | 0 | 0 | 0 | 0 | 0 |
| 3 | E7 | U3 | 0 | 0 | 0 | 0 | 0 | 1 | 0 | 0 | 0 | 0 | 0 | 0 | 0 |
| AP(t=[1-3]) | | U3 | 1 | 0 | 0 | 1 | 0 | 2 | 0 | 0 | 0 | 0 | 0 | 0 | 0 |
| 4 | E7 | U3 | 0 | 0 | 0 | 0 | 0 | 1 | 0 | 0 | 0 | 0 | 0 | 0 | 0 |

(continued)

| T | EV | US | E2 | E9 | E12 | E1 | E3 | E7 | E13 | E10 | E4 | E11 | E8 | E6 | E5 |
|---|----|----|----|----|-----|----|----|----|-----|-----|----|-----|----|----|----|
| 5 | E7 | U3 | 0 | 0 | 0 | 0 | 0 | 1 | 0 | 0 | 0 | 0 | 0 | 0 | 0 |
| 6 | E7 | U3 | 0 | 0 | 0 | 0 | 0 | 1 | 0 | 0 | 0 | 0 | 0 | 0 | 0 |
| AP(t=[4-6]) | | U3 | 0 | 0 | 0 | 0 | 0 | 3 | 0 | 0 | 0 | 0 | 0 | 0 | 0 |
| 7 | E7 | U3 | 0 | 0 | 0 | 0 | 0 | 1 | 0 | 0 | 0 | 0 | 0 | 0 | 0 |
| 8 | E9 | U3 | 0 | 1 | 0 | 0 | 0 | 0 | 0 | 0 | 0 | 0 | 0 | 0 | 0 |
| 8 | E10 | U3 | 0 | 0 | 0 | 0 | 0 | 0 | 0 | 1 | 0 | 0 | 0 | 0 | 0 |
| 9 | E9 | U3 | 0 | 1 | 0 | 0 | 0 | 0 | 0 | 0 | 0 | 0 | 0 | 0 | 0 |
| 9 | E10 | U3 | 0 | 0 | 0 | 0 | 0 | 0 | 0 | 1 | 0 | 0 | 0 | 0 | 0 |
| AP(t=[7-9]) | | U3 | 0 | 2 | 0 | 0 | 0 | 1 | 0 | 2 | 0 | 0 | 0 | 0 | 0 |
| AP(t=[10 -12]) | | | | | | | | | | | | | | | |
| 22 | E13 | U3 | 0 | 0 | 0 | 0 | 0 | 0 | 1 | 0 | 0 | 0 | 0 | 0 | 0 |
| 24 | E4 | U3 | 0 | 0 | 0 | 0 | 0 | 0 | 0 | 0 | 1 | 0 | 0 | 0 | 0 |
| 25 | E6 | U3 | 0 | 0 | 0 | 0 | 0 | 0 | 0 | 0 | 0 | 0 | 0 | 1 | 0 |
| 26 | E6 | U3 | 0 | 0 | 0 | 0 | 0 | 0 | 0 | 0 | 0 | 0 | 0 | 1 | 0 |
| 28 | E6 | U3 | 0 | 0 | 0 | 0 | 0 | 0 | 0 | 0 | 0 | 0 | 0 | 1 | 0 |
| 29 | E12 | U3 | 0 | 0 | 1 | 0 | 0 | 0 | 0 | 0 | 0 | 0 | 0 | 0 | 0 |
| AP(t=[13 -15]) | | U3 | 0 | 0 | 1 | 0 | 0 | 0 | 1 | 0 | 1 | 0 | 0 | 3 | 0 |

The various events may be captured using different event capturing mechanisms. For example, users U1, U2 may sit in front of a standard personal computer for attending the Broadcasting Hub and use primarily the chat function and avatar control device for raising the raw events. User U3 may use a camera system for motion/face recognition and use an XBOX or PS5 controller for controlling its personal avatar. Thereby, the events are detected and raised automatically by the camera system. For example, events which may be detected by the camera system comprise (but are not limited to): YAWNING, CHEER, APPLAUSE, and JUMP. Events which can be captured via an analysis of the chat function comprise (but are not limited to): POSITIV, NEUTRAL, and NEGATIV.

The aggregated action vectors for the respective aggregation time intervals show an intermediate result after the received event stream has been sorted (by time stamp), filtered and aggregated. At this stage the system knows for each user of the remote user group U1, U2, U3 the available user specific action vectors for the aggregated time intervals.

In the next step, user specific emotion vectors are obtained by applying a transformation function to the (aggregated) user specific action vectors. Table 2.1 illustrates an example transformation function which is a rule set used in the example scenario to compute each emotion vector component based on respective one or more action vector components. It is to be noted that other transformation rules may be appropriate depending on the scenario. Table 2.1 is to be understood in the following way. An event E2 for listening to music is transformed into an emotion vector component "Happy" with a value of '3' and, at the same time, into a component "Enthusiastic" with a value of '1'. Entering E1 or leaving E2 the scenario are events not associated with any user emotions. E7 YAWNING is transformed into an emotion vector component "Sad" with a value of '1' and, at the same time, into a component "Bored" with a value of '2', and so on.

Table 2.1 - transformation function

| | | Happy | Sad | Enthusiastic | Bored |
|----|------|-------|-----|--------------|-------|
| E2 | MUSIC | 3 | 0 | 1 | 1 |
| E9 | FOCUS_STAGE | 1 | 0 | 1 | 0 |
| E12 | LEAVE | 0 | 0 | 0 | 0 |
| E1 | ENTER | 0 | 0 | 0 | 0 |
| E3 | THUMBS_UP | 2 | 0 | 1 | 0 |
| E7 | YAWNING | 0 | 1 | 0 | 2 |

(continued)

|  |  | Happy | Sad | Enthusiastic | Bored |
|---|---|---|---|---|---|
| E13 | CHEER | 1 | 0 | 1 | 0 |
| E10 | APPLAUSE | 2 | 0 | 2 | 0 |
| E4 | POSITIV | 1 | 0 | 1 | 0 |
| E11 | NEUTRAL | 0 | 0 | 0 | 0 |
| E8 | NEGATIV | 0 | 1 | 0 | 1 |
| E6 | JUMP | 1 | 0 | 2 | 0 |
| E5 | SIT | 0 | 0 | 0 | 1 |

Table 2.2 is the transposed transformation matrix which is only introduced for the sake of facilitating the explanation of the transformation matrix application in table 2.3.

Table 2.2 - transposed transformation matrix

|  | E2 | E9 | E12 | E1 | E3 | E7 | E13 | E10 | E4 | E11 | E8 | E6 | E5 |
|---|---|---|---|---|---|---|---|---|---|---|---|---|---|
| **Happy (H)** | 3 | 1 | 0 | 0 | 2 | 0 | 1 | 2 | 1 | 0 | 0 | 1 | 0 |
| **Sad (S)** | 0 | 0 | 0 | 0 | 0 | 1 | 0 | 0 | 0 | 0 | 1 | 0 | 0 |
| **Enthusiastic (E)** | 1 | 1 | 0 | 0 | 1 | 0 | 1 | 2 | 1 | 0 | 0 | 2 | 0 |
| **Bored (B)** | 1 | 0 | 0 | 0 | 0 | 2 | 0 | 0 | 0 | 0 | 1 | 0 | 1 |

Table 2.3 illustrates the application of the transposed transformation matrix (table 2.2) to the latest aggregated action vector of user U3 (cf. Table 1.3):

| AP(t=[13-15]) | U3 | 0 | 0 | 1 | 0 | 0 | 0 | 1 | 0 | 1 | 0 | 0 | 3 | 0 |
|---|---|---|---|---|---|---|---|---|---|---|---|---|---|---|

Each emotion state row (Happy, Sad, Enthusiastic, Bored - HSEB) of Table 2.2 is now multiplied with the AAV row. The multiplication result is shown in the respective emotion state rows of Table 2.3. The grey shaded EV column represents the resulting user specific raw emotion vector for user U3 for the particular aggregation time interval t=[13-15]. The components of the raw emotion vector are obtained by adding all multiplication result values of the respective emotion state row, resulting in EV (5, 0, 8, 0).

| AAV | 0 | 0 | 1 | 0 | 0 | 0 | 1 | 0 | 1 | 0 | 0 | 3 | 0 | |
|---|---|---|---|---|---|---|---|---|---|---|---|---|---|---|
| | | | | | | | | | | | | | | *EV* |
| **Happy** | 0 | 0 | 0 | 0 | 0 | 0 | 1 | 0 | 1 | 0 | 0 | 3 | 0 | **5** |
| **Sad** | 0 | 0 | 0 | 0 | 0 | 0 | 0 | 0 | 0 | 0 | 0 | 0 | 0 | **0** |
| **Enthusiastic** | 0 | 0 | 0 | 0 | 0 | 0 | 1 | 0 | 1 | 0 | 0 | 6 | 0 | **8** |
| **Bored** | 0 | 0 | 0 | 0 | 0 | 0 | 0 | 0 | 0 | 0 | 0 | 0 | 0 | **0** |

Table 2.3 – applying transformation matrix to aggregated action vector

In table 3.1, the aggregated action vectors for user U1 are summarized from table 1.1

Table 3.1 - aggregated action vectors U1

| AP(t=[1-3]) | U1 | 1 | 0 | 0 | 1 | 1 | 0 | 0 | 0 | 1 | 0 | 0 | 1 | 1 |
|---|---|---|---|---|---|---|---|---|---|---|---|---|---|---|
| AP(t=[4-6]) | U1 | 0 | 1 | 0 | 0 | 0 | 2 | 0 | 0 | 1 | 0 | 1 | 3 | 0 |
| AP(t=[7-9]) | U1 | 0 | 2 | 0 | 0 | 0 | 0 | 0 | 1 | 1 | 0 | 0 | 6 | 0 |
| AP(t=[10-12]) | U1 | 0 | 3 | 0 | 0 | 4 | 0 | 0 | 0 | 0 | 0 | 0 | 2 | 0 |

(continued)

| AP(t=[13-15]) | U1 | 0 | 2 | 1 | 0 | 2 | 0 | 0 | 1 | 0 | 2 | 0 | 2 | 0 |
|---|---|---|---|---|---|---|---|---|---|---|---|---|---|---|

Table 3.2 shows the corresponding raw emotion vectors for user U1 after the application of the transformation function given in table 2.1.

Table 3.2 - raw emotion vectors U1

| | H | S | E | B |
|---|---|---|---|---|
| AP(t=[1-3]) | 7 | 0 | 5 | 2 |
| AP(t=[4-6]) | 5 | 3 | 8 | 5 |
| AP(t=[7-9]) | 11 | 0 | 17 | 0 |
| AP(t=[10-12]) | 13 | 0 | 11 | 0 |
| AP(t=[13-15]) | 10 | 0 | 10 | 0 |

Table 3.3 shows the final emotion vectors for user U1 with weights applied such that the contribution of a particular raw emotion vector receives a lower weight (i.e. becomes less important) the longer the longer this particular raw emotion vector is in the past. The particular weighting algorithm which is used in the example is the following.

If possible, for computing the emotion vector for a current integration time interval, the respective current raw emotion vector and the raw emotion vectors of the previous two aggregation time intervals are taken into account in the form of a weighted sum. Thereby, the current raw emotion vector receives a weight of '1', the raw emotion vector of the previous aggregation time interval receives a weight of '2/3', and the raw emotion vector of the before last aggregation time interval receives a weight of '1/3'. The weighted sum is then divided by '2' for normalization purpose. Of course, other weighting algorithms can be used depending on the scenario. For example, more past aggregation time intervals can be taken into account. The weighting thereby can be linear as in the example, or non-linear (e.g., exponential). As there is no preceding aggregation time interval for AP(t=[1-3]), the respective raw emotion vector is used as weighted emotion vector (weight = '1'). For the second aggregation time interval AP(t=[4-6]), only one previous aggregation time interval exists. The weighting applied in the example of table 3.3. for AP(t=[4-6]) is '1' for the current aggregation time interval and '2/3' for the preceding one with the weighted sum divided by '5/3' for normalization purpose. Other initialization weights may be used for the initial aggregation time intervals. The final weighted sum is always rounded to an integer number.

Table 3.3 - weighted emotion vectors U1

| | H | S | E | B |
|---|---|---|---|---|
| AP(t=[1-3]) | 7 | 0 | 5 | 2 |
| AP(t=[4-6]) | 6 | 2 | 7 | 4 |
| AP(t=[7-9]) | 8 | 1 | 12 | 2 |
| AP(t=[10-12]) | 11 | 1 | 13 | 1 |
| AP(t=[13-15]) | 11 | 0 | 12 | 0 |

Table 3.4 summarizes the aggregated action vectors of user U2 from table 1.2.

Table 3.4 - aggregated action vectors U2

| AP(t=[1-3]) | U2 | 1 | 3 | 0 | 1 | 2 | 1 | 0 | 0 | 0 | 0 | 0 | 3 | 0 |
|---|---|---|---|---|---|---|---|---|---|---|---|---|---|---|
| AP(t=[4-6]) | U2 | 0 | 0 | 0 | 0 | 2 | 2 | 0 | 0 | 0 | 0 | 0 | 2 | 0 |
| AP(t=[7-9]) | U2 | 0 | 3 | 0 | 0 | 4 | 0 | 0 | 0 | 0 | 0 | 0 | 0 | 0 |
| AP(t=[10-12]) | U2 | 0 | 4 | 0 | 0 | 4 | 0 | 0 | 0 | 0 | 0 | 0 | 0 | 0 |
| AP(t=[13-15]) | U2 | 0 | 1 | 1 | 0 | 1 | 0 | 0 | 1 | 0 | 2 | 0 | 2 | 0 |

Table 3.5 shows the respective raw emotion vectors for user U2 after application of the transformation function (same computation rules as for user U1).

Table 3.5 - raw emotion vectors U2

|  | H | S | E | B |
|---|---|---|---|---|
| AP(t=[1-3]) | 13 | 1 | 12 | 3 |
| AP(t=[4-6]) | 6 | 2 | 6 | 4 |
| AP(t=[7-9]) | 11 | 0 | 7 | 0 |
| AP(t=[10-12]) | 12 | 0 | 8 | 0 |
| AP(t=[13-15]) | 7 | 0 | 8 | 0 |

Table 3.6 shows the resulting weighted emotion vectors for user U2. The same weighting rules are used as for user U1.

Table 3.6 - weighted emotion vectors U2

|  | H | S | E | B |
|---|---|---|---|---|
| AP(t=[1-3]) | 13 | 1 | 12 | 3 |
| AP(t=[4-6]) | 9 | 2 | 8 | 4 |
| AP(t=[7-9]) | 10 | 1 | 8 | 2 |
| AP(t=[10-12]) | 11 | 0 | 7 | 1 |
| AP(t=[13-15]) | 9 | 0 | 8 | 0 |

Table 3.7 summarizes the aggregated action vectors of user U3 from table 1.3. A difference compared with the data of users U1 and U2 is the drop-off aggregation time interval AP(t=[10-12]) of user U3.

Table 3.7 - aggregated action vectors U3

| AP(t=[1-3]) | U3 | 1 | 0 | 0 | 1 | 0 | 2 | 0 | 0 | 0 | 0 | 0 | 0 | 0 |
|---|---|---|---|---|---|---|---|---|---|---|---|---|---|---|
| AP(t=[4-6]) | U3 | 0 | 0 | 0 | 0 | 0 | 3 | 0 | 0 | 0 | 0 | 0 | 0 | 0 |
| AP(t=[7-9]) | U3 | 0 | 2 | 0 | 0 | 0 | 1 | 0 | 2 | 0 | 0 | 0 | 0 | 0 |
| AP(t=[10-12]) | U3 | - | - | - | - | - | - | - | - | - | - | - | - | - |
| AP(t=[13-15]) | U3 | 0 | 0 | 1 | 0 | 0 | 0 | 1 | 0 | 1 | 0 | 0 | 3 | 0 |

The lacking data during AP(t=[10-12]) pose a problem that emotion vectors which are computed based on the data set of table 1.3 would result in an unsteady emotion score for such aggregation intervals where AP(t=[10-12]) has a weight impact. To overcome this problem, the raw emotion vector for AP(t=[10-12]) can be extrapolated from previous aggregation intervals. Table 3.8 shows the raw emotion vectors for user U3 using extrapolation for AP(t=[10-12]). In the example, the extrapolated values for AP(t=[10-12]) (bold italics font) are computed by using the average of the respective values for the previous three aggregation time intervals multiplied by a cool down factor and rounding the result to an integer number. The cool down factor in the example is choses as 7/10. Of course, a person skilled in the art may chose another number of previous events with another averaging method (e.g., weighted average, etc.) and another cool down factor dependent on the scenario. The value in table 3.8 for **H at** AP(t=[10-12]) is computed as:

$$RND((3+0+6)/3*7/10) = 2.$$

Table 3.8 - raw emotion vectors U3 (including extrapolation)

|  | H | S | E | B |
|---|---|---|---|---|
| AP(t=[1-3]) | 3 | 2 | 1 | 5 |

(continued)

|  | H | S | E | B |
|---|---|---|---|---|
| AP(t=[4-6]) | 0 | 3 | 0 | 6 |
| AP(t=[7-9]) | 6 | 1 | 6 | 2 |
| *AP(t=[10-12])* | *2* | *1* | *2* | *3* |
| AP(t=[13-15]) | 5 | 0 | 8 | 0 |

Table 3.9 shows the resulting weighted emotion vectors for user U3. The same weighting rules are used as for users U1, U2.

Table 3.9 - weighted emotion vectors U3

|  | H | S | E | B |
|---|---|---|---|---|
| AP(t=[1-3]) | 3 | 2 | 1 | 5 |
| AP(t=[4-6]) | 1 | 3 | 0 | 6 |
| AP(t=[7-9]) | 4 | 2 | 3 | 4 |
| AP(t=[10-12]) | 3 | 1 | 3 | 3 |
| AP(t=[13-15]) | 4 | 1 | 6 | 1 |

The system then computes an aggregated emotion matrix for the entire user group inlcuding users U1, U2, U3. Table 3.10 shows an example where the median value of tables 3.3, 3.6 and 3.9 for the weighted emotion vectors is used as an average emotion score within the user group for the respective emotional state during an aggregation time interval. For example. For **H at** AP(t=[1-3]), the median of (7, 13, 3) is 7. For **E** at AP(t=[7-9]), the median of (12, 8, 3) is 8. A person skilled in the art may use other averaging algorithms (e.g., arithmetic average) dependent on the scenario. For example, for **H at** AP(t=[1-3]), the rounded arithmetic average of (7, 13, 3) would also be 7. For **E** at AP(t=[7-9]), the rounded arithmetic average of (12, 8, 3) would also be 8.

Table 3.10 - aggregated emotion matrix (median)

|  | H | S | E | B |
|---|---|---|---|---|
| AP(t=[1-3]) | 7 | 1 | 5 | 3 |
| AP(t=[4-6]) | 6 | 2 | 7 | 4 |
| AP(t=[7-9]) | 8 | 1 | 8 | 2 |
| AP(t=[10-12]) | 11 | 1 | 7 | 1 |
| AP(t=[13-15]) | 9 | 0 | 8 | 0 |

That is, table 3.10 represent the emotional states of the entire first user group for each of the aggregation time intervals. This information is now to be communicated to the second user group (real-world attendees in the radio studio where the real-world performance takes place). For the example scenario it is assumed that a group avatar on larger screen in the studio is used to communicate the emotional states of the first user group to the second user group so that the online community's emotional reactions to the real-world event (music performance) can be experienced also by the on-site audience. Therefore, the emotional score values of the aggregated emotion matrix 3.10 are transformed into corresponding animation control signals for said group avatar.

To ensure a smooth emotional behavior of the group avatar, control (animation) instructions for certain group avatar behaviors are only transmitted to the receiving device of the second user group if a predefined transmission selection rule for the respective animation action is met. In the example, the transmission selection rule is defined by a control signal weighting table 4.1, which is applied to the aggregated emotion matrix of table 3.10 to obtain a scoring table 4.2, and the final selection of the control instruction with the highest score. Alternatively, the selection of a control instruction might only occur if the respective score exceeds a predefined threshold.

Table 4.1 defines weights (a ranking) of the emotional states H, S, E, and B for the various control (animation) instructions grin, pull a face, cheer and look bored control signal weights.

Table 4.1 - control signal weights

|  | H | S | E | B |
|---|---|---|---|---|
| **grin** | 3 | 0 | 1 | 0 |
| **pull a face** | 0 | 4 | 0 | 3 |
| **cheer** | 1.5 | 0 | 3 | 0 |
| **look bored** | 0 | 2 | 0 | 7 |

In the example, the ranking is used for computing a weighted sum of the emotional score values for each control instruction during the respective aggregation time intervals. For AP(t=[1-3]) in the first row of the control signal matrix in table 4.2, the weighted value for "grin" is computed as:

$$grin = (H)7*3 + (S)\ 1*0 + (E)5*1 + (B)3*0 = 26.$$

Similarly, the weighted value for "pull a face" is computed as:

$$pull\ a\ face = (H)7*0 + (S)1*4 + (E)5*0 + (B)3*3 = 13.$$

Similarly, the weighted value for "cheer" is computed as:

$$cheer = (H)7*1.5 + (S)1*0 + (E)5*3 + (B)3*0 = 25.5.$$

Similarly, the weighted value for "look bored" is computed as:

$$look\ bored = (H)7*0 + (S)1*2 + (E)5*0 + (B)3*7 = 23.$$

In table 4.2, such computation results for each control instruction for the respective aggregation time interval are shown. In the example, the transmission selection rule selects for each aggregated time interval the control instruction with the highest score (in bold italics). Therefore, at the end of AP(t=[1-3]), the avatar is instructed to grin. Therefore, at the end of AP(t=[4-6]), it turns to look bored. At the end of AP(t=[7-9]), it starts to cheer. Therefore, at the end of AP(t=[10-12]), the avatar is instructed again to grin. And at the end of AP(t=[13-15]), it starts to cheer again.

Table 4.2 - control signal scoring matrix

|  | grin | pull a face | cheer | look bored |
|---|---|---|---|---|
| AP(t=[1-3]) | *26* | 13 | 25,5 | 23 |
| AP(t=[4-6]) | 25 | 20 | 30 | *32* |
| AP(t=[7-9]) | 32 | 10 | *36* | 16 |
| AP(t=[10-12]) | *40* | 7 | 37,5 | 9 |
| AP(t=[13-15]) | 35 | 0 | *37,5* | 0 |

The herein disclosed approach enables the exchange of emotions between an on-site audience attending a real-world event and a remote (online) audience attending the same event remotely via respective communication devices. The parameters can be chosen such that the exchange of the emotional states is provided

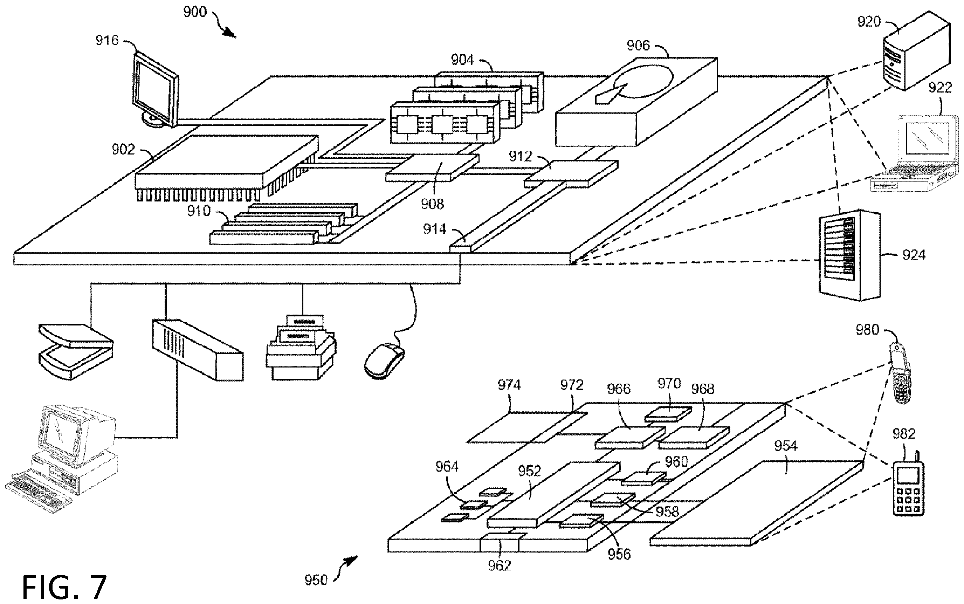

FIG. 7 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may be used as a GUI frontend for a user. For example, users of the second group may use such mobile devices as individual receiving devices for receiving the emotional state representations of the first user group. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a hard disk device, an optical disk device, or a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

**Claims**

1. A computer-implemented method (1000) for quantifying emotional states of users (1, 2, 3) of a first group (10) of users to determine control instructions for emotional state indicators associated with the first group (10) to be transmitted to a second group (20) of users, the first and second groups attending a same real-world event at different locations via different attendance modalities, the method comprising:

   receiving (1100) a stream (11) of user events for each of the users (1, 2, 3) of the first group (10) and buffering (1200) the user events (11-1 to 11-n) with their respective timestamps in a user event data structure (110), wherein each user event corresponds to a user action of a particular action type (AT1, AT2, AT3) captured for a respective user, wherein the action type is characteristic of one or more emotional states of the respective user (1, 2, 3);
   sorting (1300) the buffered user events (11-1 to 11-n) in accordance with the respective timestamps;
   aggregating (1400), during a current aggregation time interval (ATIc), the sorted user events (11f) into corresponding user specific action vectors (12), wherein each action vector component stores an aggregated user event value of the respective user for the respective action type, and setting the last time stamp (tce) of the current aggregation time interval (ATIc) as the first timestamp of a following aggregation time interval (ATIc+1);
   applying (1500) a transformation function to the user specific action vectors (12) to obtain respective user specific emotion vectors (13), wherein the transformation function has a rule set adapted to compute each emotion vector component based on respective one or more action vector components;
   computing (1600) a current emotion score vector (14) for each user (1, 2, 3) of the first group (10) as quantification of the respective emotional states by computing an average for a plurality of past user specific emotion vectors and the current user specific emotion vector;
   deriving (1700) a total current emotion score matrix (15) from the current emotion score vectors (14) for the users (1, 2, 3), and computing (1800) one or more control parameters of one or more control instructions (16) based on the current emotion score matrix values in accordance with predefined control rules, wherein a control instruction is adapted for execution on at least one receiving device (211, 212) of the second group (20) of users to communicate respective emotional state indicators (17, 18) for the first group (10) to the second group (20); and in case a control parameter of at least one control instruction complies with a predefined transmission selection rule, transmitting (1900) the respective at least one control instruction (16) to the at least one receiving device (211, 212).

2. The method of claim 1, wherein sorting (1300) further comprises:
   filtering (1320) the sorted user events (11-1 to 11-n) in accordance with predefined filtering criteria adapted to avoid predefined undesired emotional state representation effects for the second group (20) of users.

3. The method of claim 1 or 2, wherein in the computing (1600) step, the average is computed as a weighted average for the plurality of past user specific emotion vectors and the current user specific emotion vector, wherein the current user specific emotion vector has the highest weight and the weight decreases towards earlier user specific emotion vectors.

4. The method of any of the previous claims, wherein the control parameter complies with the predefined transmission selection rule in any of the following: the control parameter exceeds a predefined threshold, the control parameter dominates a further conflicting control parameter, or one or more static rules.

5. The method of any of the previous claims, wherein the received user events are received from any of the following user event detection devices: an image-based detection device (201, 202, 204) an audio-based detection device (203, 204), an interactive computer device (204), and a body-function-based detection device (205).

6. The method of any of the previous claims, wherein the particular action type is selected from any of the following:

   an action type associated with user movement comprising: sitting, jumping, bouncing, hand waving, face hiding;
   an action type associated with vocal utterance of the user comprising: cheering, laughing, crying, shouting, cursing;

an action type associated with a facial expression of the user comprising: smiling, laughing, frowning/scowling;
an action type associated with a verbal or graphical expression of the user comprising: liking, disliking;
an action type associated with a body function of the user comprising: high/normal/low heartbeat, sweating, trembling.

7. The method of any of the claims 2 to 6, wherein the predefined filtering criteria comprise any of: filtering out user events if a respective event rate exceeds a predefined event rate limit, filtering out user events which are out of current context, filtering out user events associated with BOTs, filtering out user events which occurred in the past longer than a predefined time interval ago, filtering out unlogic or self-contradicting user events.

8. The method of any of the previous claims, wherein the current aggregation time interval is a predefined time interval, or is dynamically determined in response to recent user events.

9. The method of any of the previous claims, wherein the transformation function transforms the action types (AT1, AT2, AT3) into emotion types (ET1 to ETn) of the emotion vector components comprising any of: enthusiasm, amusement, happiness, satisfaction, sadness, sorrow, disappointment, annoyance, fear, relief, surprise, contempt, disgust, confidence, tension, excitement, boredom, serenity, confusion, amazement, admiration.

10. The method of any of the previous claims, wherein, in case of a missing emotion vector at a particular point in time, the missing emotion vector is computed by extrapolation of preceding emotion vectors.

11. The method of claim 10, wherein, in case of a sequence of missing emotion vectors, the extrapolation is performed using an attenuation factor.

12. The method of any of the previous claims, wherein the total current emotion score vector is an aggregate of the current emotion vectors of all users of the first group (10).

13. The method of any of the claims 1 to 11, wherein the total current emotion score vector is an aggregate of the current emotion vectors of a sub-set of users of the first group (10) which is selected based on respective user properties.

14. The method of any of claim 13, wherein the respective user properties are determined based on the respective user specific action vectors or user specific emotion vectors.

15. The method of any of the previous claims, wherein the first group (10) of users is an online audience which attends a real-world event via Internet transmission modality, and the second group (20) of users is an on-site audience which physically attends the real-world event via a physical presence modality, or the first group of users is an on-site audience which physically attends a real-world event, and the second group of users is an online audience which attends the real-world event via Internet transmission.

16. The method of any of the previous claims, wherein at least two user events in the received stream (11) of user events originate from sensors of different sensor types.

17. The method of claim 16, wherein the at least two user events relate to a same action of a particular user, and one of the at least two user events is filtered out.

18. A computer program product for quantifying emotional states of users (1, 2, 3) of a first group (10) of users to determine control instructions for transmitting emotional state indicators associated with the first group (10) to a second group (20) of users, the first and second groups attending a same real-world event at different locations via different attendance modalities, the program when loaded into a memory of a computing device and executed by at least one processor of the computing device executes the steps of the computer-implemented method according to of anyone of the previous claims.

19. A computer system (100) adapted for quantifying emotional states of users (1, 2, 3) of a first group (10) of users to determine control instructions for transmitting emotional state indicators associated with the first group (10) to a second group (20) of users, the first and second groups attending a same real-world event at different locations via different attendance modalities, comprising functional modules (110 to 180) adapted to execute the method steps according to any of the claims 1 to 17.

FIG. 1

<u>1000</u>

```
┌─────────────────────────────────────┐
│  receiving stream of user events     │
│  for users of first group of users   │ ~ 1100
└─────────────────────────────────────┘
              │
              ▼
┌─────────────────────────────────────┐
│       buffering the user events      │ ~ 1200
└─────────────────────────────────────┘
              │
              ▼
┌─────────────────────────────────────┐
│      sorting buffered user events    │
│   ┌ ─ ─ ─ ─ ─ ─ ─ ─ ─ ─ ─ ─ ─ ┐     │ ~ 1300
│   │     filtering 1320          │     │
│   └ ─ ─ ─ ─ ─ ─ ─ ─ ─ ─ ─ ─ ─ ┘     │
└─────────────────────────────────────┘
              │
              ▼
┌─────────────────────────────────────┐
│    aggregating sorted user events    │
│  into corresponding user specific    │ ~ 1400
│           action vectors             │
└─────────────────────────────────────┘
              │
              ▼
┌─────────────────────────────────────┐
│  applying transformation function    │
│  to user specific action vectors to  │ ~ 1500
│  obtain respective user specific     │
│          emotion vectors             │
└─────────────────────────────────────┘
              │
              ▼
┌─────────────────────────────────────┐
│  computing current emotion score     │
│  vector for each user of the first   │ ~ 1600
│              group                   │
└─────────────────────────────────────┘
              │
              ▼
┌─────────────────────────────────────┐
│    deriving total current emotion    │
│   score matrix from current emotion  │ ~ 1700
│           score vectors              │
└─────────────────────────────────────┘
              │
              ▼
┌─────────────────────────────────────┐
│   computing control instructions     │
│   based on current emotion score     │ ~ 1800
│            matrix values             │
└─────────────────────────────────────┘
              │
              ▼
          ◇ threshold ◇ ──── 1850          1860
          ◇ comparison ◇ <= T ──────►┌──────────────┐
              │   >T                  │ discard      │
              ▼                       │ control      │
┌─────────────────────────────────────┐│ instructions │
│  transmitting control instructions   │└──────────────┘
│  to receiving device of second       │ ~ 1900
│           group of users             │
└─────────────────────────────────────┘
```

FIG. 2

FIG. 3

FIG. 4

$$
\begin{array}{c}
\begin{array}{cccc}
\text{ESV\_U1} & \text{ESV\_U2} & \text{ESV\_Um-1} & \text{ESV\_Um}
\end{array} \\
\begin{bmatrix}
4 & 4 & & 4 & 4 \\
2 & 2 & & 2 & 2 \\
0 & 0 & & 0 & 0 \\
\\
... & ... & ... & ... & ... \\
\\
1 & 1 & & 1 & 1 \\
0 & 0 & & 0 & 0 \\
2 & 2 & & 2 & 2
\end{bmatrix} \text{ESM}
\end{array}
$$

1000

CI1
CI2        CI2'

# FIG. 5

60

# FIG. 6

FIG. 7

# EUROPEAN SEARCH REPORT

**Application Number**

EP 24 16 0782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/307661 A1 (MCDUFF STEVE [CA]) 25 October 2018 (2018-10-25) * paragraph [0004] * * paragraph [0005] * * paragraph [0019] * * paragraph [0040] * * paragraph [0043] * * paragraph [0044] * * paragraph [0045] * * paragraph [0049] * * paragraph [0051] * | 1-19 | INV. G06F16/95 G06F17/40 |
| X | US 2018/144761 A1 (AMINI REZA [US] ET AL) 24 May 2018 (2018-05-24) * paragraph [0081] - paragraph [0084] * * paragraph [0108] * * paragraph [0116] * * paragraph [0125] - paragraph [0127] * | 1-19 | |
| A | US 10 846 051 B1 (CHATZIPANAGIOTIS NIKOLAOS [US] ET AL) 24 November 2020 (2020-11-24) * the whole document * | 1-19 | **TECHNICAL FIELDS SEARCHED (IPC)** G06F |
| A | WO 2022/078609 A1 (HUAWEI TECH CO LTD [CN]; TROSSEN DIRK [DE]) 21 April 2022 (2022-04-21) * the whole document * | 1-19 | |
| A | RU 2 610 944 C2 (KONINKLEJKE FILIPS NV [NL]) 17 February 2017 (2017-02-17) * the whole document * | 1-19 | |

The present search report has been drawn up for all claims

| Place of search | Date of completion of the search | Examiner |
|---|---|---|
| The Hague | 4 July 2024 | Papanikolaou, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0782

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| US 2018307661 A1 | 25-10-2018 | NONE | |
| US 2018144761 A1 | 24-05-2018 | US 9812151 B1 | 07-11-2017 |
| | | US 2018144761 A1 | 24-05-2018 |
| | | WO 2018093770 A2 | 24-05-2018 |
| US 10846051 B1 | 24-11-2020 | NONE | |
| WO 2022078609 A1 | 21-04-2022 | EP 4218166 A1 | 02-08-2023 |
| | | WO 2022078609 A1 | 21-04-2022 |
| RU 2610944 C2 | 17-02-2017 | BR 112014014103 A2 | 13-06-2017 |
| | | CN 103974657 A | 06-08-2014 |
| | | EP 2790582 A1 | 22-10-2014 |
| | | JP 6178800 B2 | 09-08-2017 |
| | | JP 2015505702 A | 26-02-2015 |
| | | RU 2014129016 A | 10-02-2016 |
| | | US 2014350349 A1 | 27-11-2014 |
| | | WO 2013088307 A1 | 20-06-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Facial Expression. Encyclopedia of Human Behavior. 2012